# EUROPEAN PATENT APPLICATION

(11) **EP 4 693 037 A1**
(43) Date of publication of application: **11.02.2026**
(21) Application number: 23935131.5
(22) Date of filing: 12.12.2023
(51) Int. Cl.: G06F 9/448

(54) **PROGRAM RUNNING METHOD, AND DEVICE**

(30) Priority: 26.04.2023 CN 202310475447
(71) Applicant: Huawei Technologies Co., Ltd., Shenzhen, Guangdong 518129 (CN)
(72) Inventor: YU, Dezhao, Shenzhen, Guangdong 518129 (CN); HUANG, Shengda, Shenzhen, Guangdong 518129 (CN); DONG, Ruofan, Shenzhen, Guangdong 518129 (CN); WANG, Ji, Shenzhen, Guangdong 518129 (CN); ZHOU, Yiyang, Shenzhen, Guangdong 518129 (CN); HE, Zhonghai, Shenzhen, Guangdong 518129 (CN)
(74) Representative: Gill Jennings & Every LLP
(86) International application number: PCT/CN2023/138169
(87) International publication number: WO 2024/221965

(57) **Abstract**

A program running method and a device are provided, relate to the field of terminal technologies, and can improve efficiency of running an application. The method includes: obtaining a dynamic image of an application, where the dynamic image includes a trampoline function pointer segment, the trampoline function pointer segment includes at least one trampoline function pointer, the at least one trampoline function pointer corresponds to at least one interface, and the at least one interface includes an interface of a kernel or an interface of a common code library; and calling the interface of the kernel or the interface of the common code library based on the trampoline function pointer segment, to run the application.

## Description

This application claims priority to Chinese Patent Application No. 202310475447.3, filed with the China National Intellectual Property Administration on April 26, 2023 and entitled "PROGRAM RUNNING METHOD AND DEVICE", which is incorporated herein by reference in its entirety.

### TECHNICAL FIELD

This application relates to the field of terminal technologies, and in particular, to a program running method and a device.

### BACKGROUND

With development of terminal technologies, a quantity of applications installed on an electronic device gradually increases, and an increasing quantity of more complex functions are provided for a user. There is a high requirement on real-time performance in an embedded field. However, in an existing solution for running an application, running efficiency of the application is low, and the real-time performance requirement cannot be met.

### SUMMARY

This application provides a program running method and a device, to improve efficiency of running an application.

To achieve the foregoing objective, this application uses the following technical solutions.

According to a first aspect, a program running method is provided and applied to a device. The method may be performed by the device, or may be performed by a component of the device, for example, a processor, a chip, or a chip system of the device, or may be implemented by a logic module or software that can implement all or some device functions. The method includes: obtaining a dynamic image of an application, where the dynamic image includes a trampoline function pointer segment, the trampoline function pointer segment includes at least one trampoline function pointer, the at least one trampoline function pointer corresponds to at least one interface, and the at least one interface includes an interface of a kernel or an interface of a common code library; and calling the interface of the kernel or the interface of the common code library based on the trampoline function pointer segment, to run the application.

Based on the foregoing technical solution, when an electronic device runs the dynamic image of the application, because the dynamic image includes the trampoline function pointer segment, and the trampoline function pointer in the trampoline function pointer segment corresponds to the interface of the kernel or the interface of the common code library, the application may directly jump to a system function, for example, an interface function of the kernel or an interface function of the common code library, by using the trampoline function pointer, to call an interface of a memory or the interface of the common code library. This can achieve effect of direct addressing, can shorten call time of the system function, and has high running efficiency and a quick response.

In a possible design, the trampoline function pointer segment is determined based on interface information, and the interface information indicates a mapping relationship between the at least one interface and at least one trampoline function address. Based on the design, the trampoline function pointer segment in the dynamic image is determined based on the mapping relationship between the interface of the kernel or an interface of common code and the trampoline function address. Subsequently, the trampoline function pointer segment may be used to implement the system function, for example, direct calling of the interface function of the kernel or the interface function of the common code library. This implements direct addressing, completes calling of the interface of the kernel and the interface of the common code library, shortens call time of the system function, and improves running efficiency of the program.

In a possible design, the obtaining a dynamic image of an application includes: compiling the application, to generate a first dynamic image, where the first dynamic image includes a symbol table, a data segment, and a code segment; and determining the dynamic image based on the first dynamic image, where the dynamic image further includes the data segment and the code segment, and the dynamic image does not include the symbol table. Based on the design, an image obtained by compiling the application is simplified. For example, the symbol table that occupies most memory space is deleted during generation of the final dynamic image, so that a size of the dynamic image can be effectively reduced, overheads of system resources can be reduced, and loading and running of diversified services can be completed by using minimum system resources.

In a possible design, the dynamic image further includes a description segment, and the description segment includes one or more of the following: a dynamic image size, a data space size, an entry function offset, and a trampoline function pointer offset. Based on the design, the description segment is added to the dynamic image. The description segment includes some parameters related to the dynamic image. The dynamic image may be checked by using the description segment, and whether to run the dynamic image is determined based on whether the check succeeds, so that security and reliability of program running can be improved.

In a possible design, after the obtaining a dynamic image of an application, the method further includes: obtaining a dynamic loading request, where the dynamic loading request is used to request to load the dynamic image; entering, in a user mode, a kernel mode through a system call, to obtain the description segment in the dynamic image; and checking the dynamic image in the user mode based on the description segment. Based on the design, the dynamic image is checked in the user mode. If an attack specifically targeting the application exists, the user mode may be attacked, and a risk of directly attacking the kernel is significantly reduced. If the user mode is attacked, running of another application and the entire electronic device is not affected, and reliability can be improved. Therefore, upgrade or incremental deployment of a user service can be stably and reliably completed, and an authenticated service and the kernel are not affected.

In a possible design, after the obtaining a dynamic image of an application, the method further includes: allocating, in the user mode, data space based on the data space size; and initializing, in the data space, a data segment that does not include an initial value. Based on the design, the data segment that does not include the initial value is initialized in the user mode. If an attack specifically targeting the application exists, the user mode may be attacked, and a risk of directly attacking the kernel is significantly reduced. If the user mode is attacked, running of another application and the entire electronic device is not affected, and reliability can be improved. In addition, compared with an attack on the kernel, an attack on the user mode results in a smaller fault domain. After a fault occurs, only a single application is restarted, and other service functions are not affected, so that fault recovery time is short.

According to a second aspect, a device is provided. The device has a function of implementing the method according to any one of the first aspect and the designs of the first aspect. The function may be implemented by hardware, or may be implemented by hardware executing corresponding software. The hardware or the software includes one or more modules corresponding to the function. In a possible example, the device includes an obtaining unit (or referred to as an obtaining module) and a processing unit (or referred to as a processing module). The obtaining unit is configured to obtain a dynamic image of an application, where the dynamic image includes a trampoline function pointer segment, the trampoline function pointer segment includes at least one trampoline function pointer, the at least one trampoline function pointer corresponds to at least one interface, and the at least one interface includes an interface of a kernel or an interface of a common code library. The processing unit is configured to call the interface of the kernel or the interface of the common code library based on the trampoline function pointer segment, to run the application.

In a possible design, the trampoline function pointer segment is determined based on interface information, and the interface information indicates a mapping relationship between the at least one interface and at least one trampoline function address.

In a possible design, the processing unit is specifically configured to: compile the application, to generate a first dynamic image, where the first dynamic image includes a symbol table, a data segment, and a code segment; and determine the dynamic image based on the first dynamic image, where the dynamic image further includes the data segment and the code segment, and the dynamic image does not include the symbol table.

In a possible design, the dynamic image further includes a description segment, and the description segment includes one or more of the following: a dynamic image size, a data space size, an entry function offset, and a trampoline function pointer offset.

In a possible design, the obtaining unit is further configured to obtain a dynamic loading request, where the dynamic loading request is used to request to load the dynamic image; the obtaining unit is further configured to enter, in a user mode, a kernel mode through a system call, to obtain the description segment in the dynamic image; and the processing unit is further configured to check the dynamic image in the user mode based on the description segment.

In a possible design, the processing unit is further configured to: allocate, in the user mode, data space based on the data space size; and initialize, in the data space, a data segment that does not include an initial value.

Optionally, the device in the second aspect may further include a storage unit, and the storage unit stores a program or instructions. When the processing unit executes the program or the instructions, the device according to the second aspect is enabled to perform the method according to the first aspect.

According to a third aspect, a device is provided, including a processor and a memory, where the memory is coupled to the processor, the memory is configured to store program code, the program code includes instructions, and the processor reads the instructions from the memory, so that the device performs the method according to any one of the first aspect and the designs of the first aspect.

In a possible design, the device further includes a communication interface, and the communication interface may be used by the device to communicate with another apparatus (for example, an electronic device). For example, the communication interface may be a transceiver, an input/output interface, an interface circuit, an output circuit, an input circuit, a pin, a related circuit, or the like.

In a possible design, the device may further include a display, and the display may be used by the device to perform a display operation.

According to a fourth aspect, a computer-readable storage medium is provided. The computer-readable storage medium includes a computer program or instructions, and when the computer program or the instructions are run on a device, the device is enabled to perform the method according to any one of the first aspect and the designs of the first aspect.

According to a fifth aspect, a computer program product is provided. When the computer program product is run on a computer, the computer is enabled to perform the method according to any one of the first aspect and the designs of the first aspect.

According to a sixth aspect, a circuit system is provided. The circuit system includes a processing circuit, and the processing circuit is configured to perform the method according to any design in the first aspect.

According to a seventh aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to any one of the first aspect and the designs of the first aspect.

It should be noted that, for technical effects brought by any design of the second aspect to the seventh aspect, refer to the technical effects brought by a corresponding design of the first aspect or the second aspect. Details are not described herein again.

### BRIEF DESCRIPTION OF DRAWINGS

FIG. 1 is a diagram of types of an electronic device according to an embodiment of this application;
FIG. 2 is a diagram of a hardware structure of an electronic device according to an embodiment of this application;
FIG. 3A is a block diagram of a software structure of an electronic device according to an embodiment of this application;
FIG. 3B is a block diagram of a memory structure of an electronic device according to an embodiment of this application;
FIG. 4 is a schematic flowchart of a program running method according to an embodiment of this application;
FIG. 5 is a diagram of a resident image according to an embodiment of this application;
FIG. 6A is a diagram of a first dynamic image according to an embodiment of this application;
FIG. 6B is a diagram of a dynamic image according to an embodiment of this application;
FIG. 7 is a diagram of a scenario according to an embodiment of this application; and
FIG. 8 is a diagram of a structure of a device according to an embodiment of this application.

### DESCRIPTION OF EMBODIMENTS

The following describes the technical solutions in embodiments of this application with reference to the accompanying drawings in embodiments of this application. In descriptions of embodiments of this application, terms used in the following embodiments are merely intended for a purpose of describing specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or at least two (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes a direct connection and an indirect connection, unless otherwise stated. "First" and "second" are merely intended for a purpose of description, and shall not be understood as an indication or implication of relative importance or implicit indication of a quantity of indicated technical features.

In embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the term such as "example" or "for example" is intended to present a related concept in a specific manner.

In embodiments of this application, an "application" may be a computer program for completing one or more tasks, including but not limited to a process or a program that is run in a system and that has no visible user interface, and a program that has a visible user interface. A "common code library" may include code that can be accessed or called by one or more applications.

In some embodiments, there is a high requirement on real-time performance and reliability in the embedded field. However, in an existing solution for running an application, running efficiency of the application is low, and the real-time performance requirement cannot be met. In addition, an electronic device loads an application, to provide a function corresponding to the application for a user. However, when the electronic device loads the application by using a kernel, if an external attack specifically targeting the application exists, the kernel that is loading the application is attacked, causing a crash of the kernel. Consequently, running of another application and the entire electronic device is affected, and reliability is poor. In addition, system resources of an electronic device in the embedded field are limited.

Therefore, embodiments of this application provide a program running method. In a process of running the application, the electronic device directly accesses the kernel and/or a common code library based on a trampoline function pointer segment. The trampoline function pointer segment includes at least one trampoline function pointer, the at least one trampoline function pointer corresponds to at least one interface, and the at least one interface includes an interface of the kernel and/or an interface of the common code library, so that direct addressing can be performed, and running efficiency is improved.

In addition, the electronic device combines a user mode and a kernel mode to load a dynamic image. If an attack specifically targeting the application exists, the user mode may be attacked, and a risk of attacking the kernel is significantly reduced. If the user mode is attacked, running of another application and the entire electronic device is not affected, and reliability can be improved. In addition, the electronic device deletes a symbol table to simplify the dynamic image, so that a size of the dynamic image can be effectively reduced, and overheads of system resources can be reduced.

To make embodiments of this application clearer, the following uniformly describes a part of content and concepts related to embodiments of this application.

### First, embedded system

An embedded system is a type of computer system that combines a software system and a hardware system. An embedded device has few hardware resources, with a memory generally ranging from a kilobyte (kilobyte, KB) level to a megabyte (MByte, MB) level and no hard disk. The embedded device generally uses storage media such as a flash memory.

### Second, kernel mode and user mode

A kernel mode and a user mode are two running levels of an operating system. An application running in the user mode cannot directly access a data structure and a program of a kernel of the operating system. When an electronic device executes an application on the operating system, the application is run in the user mode most of the time. When the application needs help of the operating system to complete some work that the application has no permission and capability to complete, the application may switch to the kernel mode through a system call to request a kernel service.

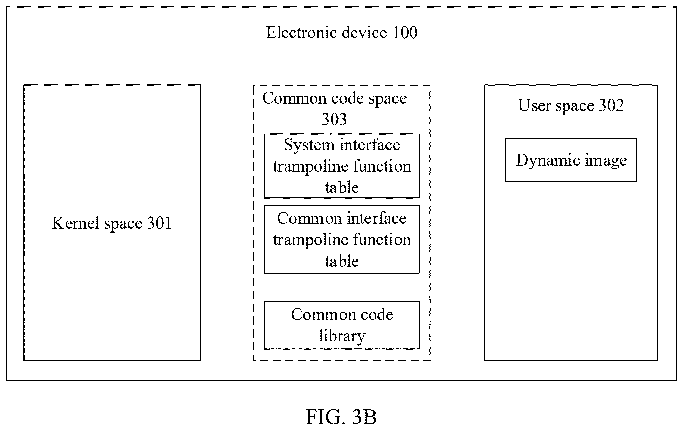

When the electronic device runs a program in kernel space, the program may be referred to as running in the kernel mode. When the electronic device runs a program in user space, the program may be referred to as running in the user mode. For specific implementation of the kernel space and the user space, refer to corresponding descriptions in FIG. 3B. Details are not described herein.

### Third, dynamic loading

Dynamic loading is a program running mechanism that enables a computer program to load a library (or another binary object) to a memory during running (rather than during compiling), then search for addresses of functions and variables in the library, execute these functions or access these variables, and unload the library from memory when the library is not needed.

### Fourth, trampoline function

A trampoline function includes external symbols on which a dynamic image may depend, and includes a kernel system call function and a common library function. The trampoline function is used to participate in compilation of the dynamic image in a specific form, and convert a dependent external symbol into a base address and a corresponding offset of the trampoline function.

### Fifth, symbol table

Symbols are variable names and function names in a program. The symbols include global symbols, external symbols, and local symbols.

A symbol table is a set of symbols. The symbol table may also be referred to as a symbol array, and each element in the symbol array is a symbol.

For example, a standard symbol table meets a specific format, an executable file (executable and linking format, ELF) generated by compiling an application carries information about the symbol table, all the information about the symbol table is summarized into a .symtab section, and the .symtab section is an ElfN_Sym array used to store symbol information. Information about a symbol table of a target file may be viewed by using a readelf -s command. Each symbol is specifically defined as follows:

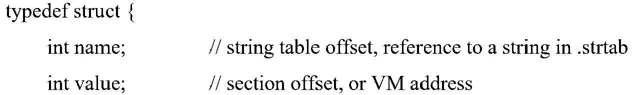

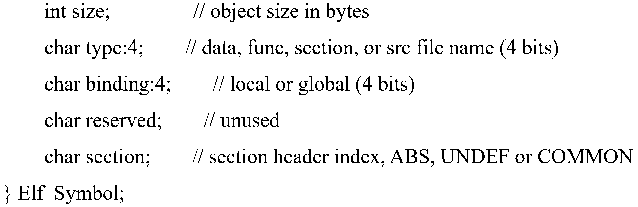

The program running method provided in embodiments of this application may be applied to an electronic device 100.

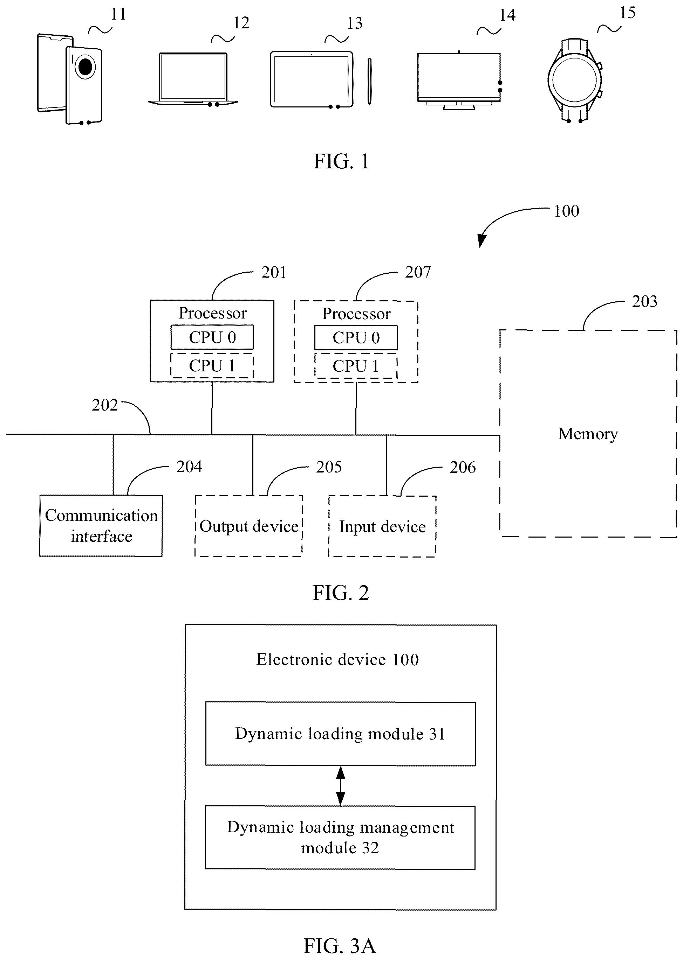

For example, as shown in FIG. 1, the electronic device 100 may be specifically a mobile phone 11, a notebook computer 12, a tablet computer 13, a large-screen device 14, a wearable device (for example, a smartwatch or a smart band) 15, a smart speaker, a vehicle-mounted device, a smart vehicle, a vehicle, an airplane, an uncrewed aerial vehicle, an ultra-mobile personal computer (ultra-mobile personal computer, UMPC), a netbook, a personal digital assistant (personal digital assistant, PDA), an artificial intelligence (artificial intelligence, AI) device, a virtual reality (virtual reality, VR) terminal, an augmented reality (augmented reality, AR) terminal, an internet of things (internet of things, IoT) terminal, a terminal in industrial control (industrial control), a terminal in self driving (self driving), a terminal in smart healthcare (remote medical), a terminal in a smart grid (smart grid), a terminal in a smart city (smart city), a terminal in a smart home (smart home), an express delivery terminal in smart logistics (for example, a device that can monitor a location of a goods vehicle and a device that can monitor a temperature and humidity of goods), a terminal in smart agriculture (for example, a wearable device that can collect data related to livestock and poultry), a terminal in a smart building (for example, a smart elevator, a fire monitoring device, and a smart meter), a terminal in smart healthcare (for example, a wearable device that can monitor a physiological status of people or animals), a terminal in smart transportation (for example, an intelligent bus, an intelligent vehicle, a shared bicycle, a charging pile monitoring device, an intelligent traffic light, an intelligent monitor, and an intelligent parking device), a terminal in smart retail (for example, a vending machine, a self-service checkout machine, and an unmanned convenience store), a terminal in digital energy (for example, a power supply device and an energy storage device in a photovoltaic power generation system or a wind power generation system), an embedded device, or the like.

For another example, the electronic device 100 may be specifically a network device, for example, a NodeB (NodeB, NB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission/reception point (transmission/reception point, TRP), or may be a gNB or a transmission point (TRP or TP) in a 5G system like an NR system, or a network node, for example, a baseband unit (BBU) or a distributed unit (distributed unit, DU), that constitutes a gNB or a transmission point, or a satellite. For still another example, the electronic device 100 in this application may be a module, a module unit, a component, a chip, or the like built in any device as one or more components or units. In some embodiments, the electronic device 100 may be a fixed device, or may be a portable device.

Optionally, an operating system installed on the electronic device 100 includes but is not limited to an embedded operating system, iOS^{®}, Android^{®}, Harmony^{®}, Windows^{®}, Linux^{®}, or another operating system. A specific type of the electronic device 100 and the operating system installed on the electronic device 100 are not limited in this application.

For example, FIG. 2 is a diagram of a structure of an electronic device 100.

The electronic device 100 includes one or more processors 201. Optionally, the electronic device 100 may further include a communication line 202, at least one communication interface (in FIG. 2, an example in which a communication interface 204 and one processor 201 are included is merely used for description), and a memory 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path, to connect different components.

The communication interface 204 may be a transceiver module that is configured to communicate with another device or communication network, for example, Ethernet, a RAN, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or wireless communication such as ZigBee (ZigBee) and 2G/3G/4G/5G. For example, the transceiver module may be an apparatus such as a transceiver or a transceiver machine. Optionally, the communication interface 204 may alternatively be a transceiver circuit located in the processor 201, to implement signal input and signal output of the processor.

The memory 203 may be an apparatus having a storage function, for example, may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory may exist independently, and is connected to the processor through the communication line 202. The memory may alternatively be integrated with the processor.

The memory 203 is configured to store computer-executable instructions for executing the solutions in this application, and the processor 201 controls the execution. The processor 201 is configured to execute the computer-executable instructions stored in the memory 203, to implement the method provided in embodiments of this application.

Alternatively, in embodiments of this application, the processor 201 may implement a processing-related function in the method provided in the following embodiments of this application, and the communication interface 204 may be responsible for communicating with the another device or the communication network. This is not specifically limited in embodiments of this application.

Optionally, the memory 203 in this embodiment of this application may be further configured to store information or parameters described in the following embodiments.

The computer-executable instructions in embodiments of this application may also be referred to as application code. This is not specifically limited in embodiments of this application.

During specific implementation, in an embodiment, the processor 201 may include one or more CPUs, for example, a CPU 0 and a CPU 1 in FIG. 2.

During specific implementation, in an embodiment, the electronic device 100 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the electronic device 100 may further include an output device 205 and an input device 206. The output device 205 communicates with the processor 201, and may display information in a plurality of manners.

It may be understood that the structure shown in this embodiment of this application does not constitute a specific limitation on a structure and a form of the electronic device 100. The structure and the form of the electronic device 100 are not limited in embodiments of this application.

In some other embodiments of this application, the electronic device 100 may include more or fewer components than those shown in the figure (for example, may further include a sensor module, a display, an audio module, and/or a camera), or some components may be combined, or some components may be split, or a different component arrangement may be used. The components shown in the figure may be implemented by hardware, software, or a combination of software and hardware.

In addition, an interface connection relationship between the modules illustrated in FIG. 2 is merely an example for description, and does not constitute a limitation on the structure of the electronic device 100. In some other embodiments of this application, the electronic device 100 may alternatively use an interface connection manner different from that in FIG. 2, or use a combination of a plurality of interface connection manners.

It should be noted that a software system of the electronic device 100 may use a layered architecture, an event-driven architecture, a microkernel architecture, a micro service architecture, or a cloud architecture. FIG. 3A is a block diagram of a software structure of an electronic device 100 according to an embodiment of this application.

As shown in FIG. 3A, the electronic device 100 includes but is not limited to one or more of the following software modules: a dynamic loading module 31 and a dynamic loading management module 32.

The dynamic loading module 31 is configured to: copy a data segment in a dynamic image to data space, configure an initialization process structure, initialize a running environment of the dynamic image, and the like.

The dynamic loading management module 32 is configured to: check the dynamic image, allocate the data space from a memory pool, initialize a data segment that does not include an initial value, and the like. The dynamic loading management module may also be referred to as a dynamic loading managing device.

For example, an electronic device including an embedded operating system of a layered architecture is used as an example. The operating system of the electronic device may include a user layer and a kernel layer. For example, the dynamic loading module 31 may be located at the kernel layer of the operating system of the electronic device, and the dynamic loading management module 32 may be located at the user layer of the electronic device. Specifically, the user layer includes a component layer and an application layer. The dynamic loading management module 32 may be located at the component layer of the electronic device. For specific descriptions of the operating system and layers (such as the user layer, the kernel layer, the component layer, and the application layer of the embedded operating system), refer to explanations and descriptions in a conventional technology. Details are not described in this embodiment of this application.

It may be understood that the software modules included in the electronic device 100 shown in FIG. 3A are merely used as a possible division manner, and the electronic device 100 may alternatively include more or fewer modules, or there may be another division manner. This is not limited in this application.

FIG. 3B is a block diagram of a memory structure of an electronic device 100 according to an embodiment of this application.

Memory space of the electronic device 100 may include but is not limited to one or more of the following: kernel space 301, user space 302, and common code space 303.

The kernel space 301 is address space that is allocated by an operating system in a memory and that is used by a kernel. When the electronic device 100 runs a program (for example, an application or another program) in the kernel space, the program may be referred to as running in a kernel mode. With reference to FIG. 3A, the dynamic loading module 31 runs in the kernel space 301.

The user space 302 is address space that is allocated by the operating system in the memory and that is used by an application. When the electronic device 100 runs a program (for example, an application or another program) in the user space, the program may be referred to as running in a user mode. With reference to FIG. 3A, the dynamic loading management module 32 runs in the user space 302. For example, the dynamic loading management module 32 running in the user space 302 (or the user mode) may trigger the dynamic loading module 31 in the kernel mode to perform a corresponding function.

The kernel space is distinguished from the user space, so that code of the operating system (the code of the operating system is much more robust than code of the application) can be isolated from the code of the application.

The common code space 303 is address space that is allocated by the operating system in the memory, and is used to store a common code library, a system interface trampoline function table, a common interface trampoline function table, and the like. Optionally, the common code library, the system interface trampoline function table, and the common interface trampoline function table may be located at a component layer of the electronic device 100.

It may be understood that the address space included in the electronic device 100 shown in FIG. 3B is merely used as a possible division manner, and the electronic device 100 may include more or less space, or there may be another division manner. This is not limited in this application.

All technical solutions in the following embodiments may be implemented in an apparatus having the structure shown in FIG. 2, FIG. 3A, and/or FIG. 3B.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all operations in embodiments of this application need to be performed.

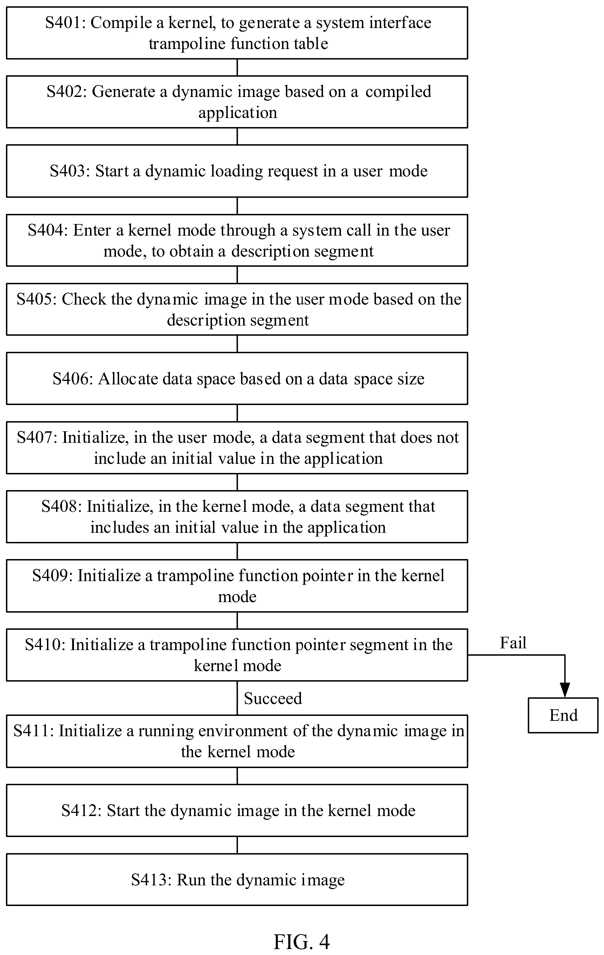

The following describes in detail the program running method provided in embodiments of this application with reference to FIG. 4 to FIG. 7.

For example, FIG. 4 is a schematic flowchart of a program running method according to an embodiment of this application. As shown in FIG. 4, the method includes the following steps.

S401: An electronic device compiles a kernel, to generate a system interface trampoline function table.

For example, the system interface trampoline function table indicates a mapping relationship between at least one system interface and at least one trampoline function address, and the at least one system interface is in a one-to-one correspondence with the at least one trampoline function address.

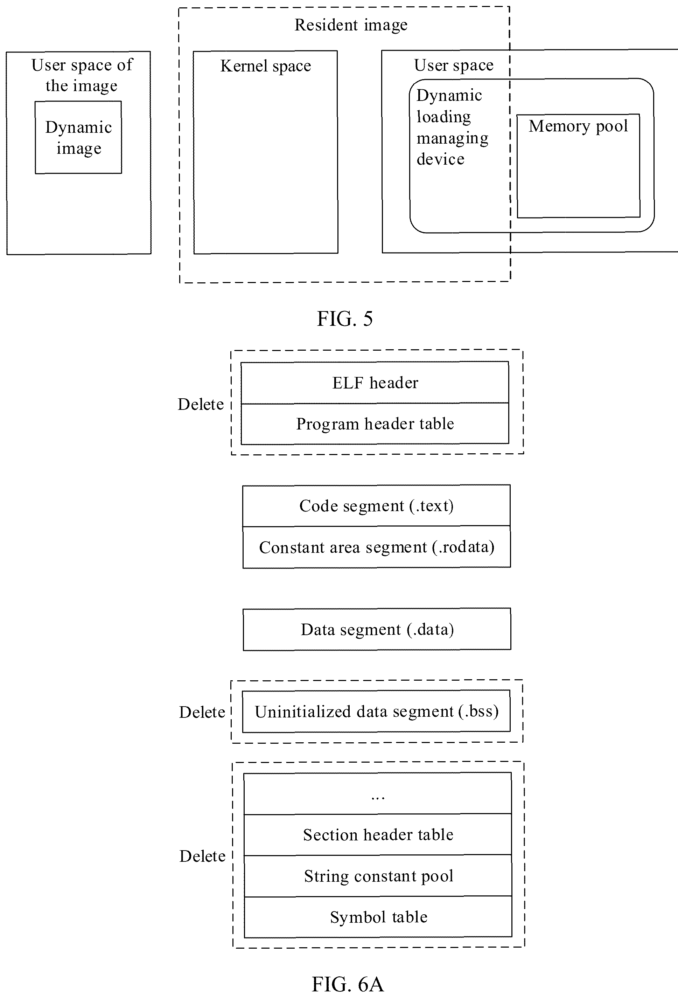

In some embodiments, the electronic device compiles the kernel, to generate a resident image, and the resident image may also be referred to as a system image. For example, the resident image generated by compiling the kernel by the electronic device may be shown in FIG. 5, where kernel space and space of a dynamic loading management module are packaged into the resident image, and the resident image may be a segment of address space or a memory area.

For example, the resident image includes (or stores) at least one system interface, the system interface is an interface of the kernel (or the kernel space), and the system interface is used by user space to call the kernel space. For example, an application (for example, an application running in a user mode) may call the kernel through the system interface. The electronic device encapsulates the at least one system interface and the at least one trampoline function address, to generate the system interface trampoline function table (g_syscallsDispatchList).

Optionally, the electronic device may further generate a common interface trampoline function table, for example, compile a common code library to generate the common interface trampoline function table. For example, the electronic device encapsulates at least one common interface and the at least one trampoline function address, to generate the common interface trampoline function table (g_libcallsDispatchList). The common interface is an interface of the common code library, and the common interface is used by the user space to call the common code library. For example, an application (for example, an application running in the user mode) accesses the common code library through the common interface.

For example, the common interface trampoline function table may indicate a mapping relationship between the at least one common interface and the at least one trampoline function address, and the at least one common interface is in a one-to-one correspondence with the at least one trampoline function address.

Optionally, the system interface trampoline function table and the common interface trampoline function table may be combined into one table, provided that a corresponding correspondence can be indicated.

For example, with reference to FIG. 3B, the system interface trampoline function table and the common interface trampoline function table may be stored in the common code space 303, and any application may access the common code space 303, to obtain the system interface trampoline function table and the common interface trampoline function table.

S402: The electronic device generates a dynamic image based on the compiled application.

As shown in FIG. 5, the electronic device compiles the application in the user space, to generate the dynamic image. The dynamic image is stored in user space of the image, and the user space of the image is address space that is allocated by an operating system in a memory and that is used to store the dynamic image.

For example, the dynamic image stores (or includes) but is not limited to one or more of the following: a code segment, a data segment, a trampoline function pointer segment, and a description segment, and the dynamic image does not include a symbol table.

Optionally, the dynamic image may be a segment of address space or a memory area, and may be used to store the code segment, the data segment, the trampoline function pointer segment, the description segment, and/or the like.

For example, the code segment (.text) includes code of the application.

Optionally, a size of a memory area of the code segment is determined before the application runs, and is usually read-only. In some architectures, the code segment is alternatively allowed to be writable. That is, the application is allowed to be modified. The code segment may also include some read-only constant variables, for example, string constants.

For example, the data segment (.data) includes an initialized global variable and an initialized static variable in the application.

For example, the trampoline function pointer segment includes at least one trampoline function pointer. For example, at least one trampoline function pointer segment includes a trampoline function pointer corresponding to a system interface and/or a trampoline function pointer corresponding to a common interface.

For example, the at least one trampoline function pointer corresponds to at least one interface, and the at least one interface includes an interface of the kernel space and/or an interface of the common code library. The trampoline function pointer indicates a function address of the system interface or a function address of the common interface.

For example, the description segment (.description) includes but is not limited to one or more of the following: a dynamic image size, a data space size, an entry function offset, and a trampoline function pointer offset.

For example, the dynamic image size indicates a size of address space of the dynamic image.

For example, the data space size indicates a size of memory space used to store data.

For example, the entry function offset indicates an offset of an entry address of the application relative to a reference address. The reference address is a base address of the dynamic image, for example, an address 0.

For example, the trampoline function pointer offset indicates an offset of an address to which the trampoline function pointer points relative to a reference address. The reference address is a base address of the dynamic image, for example, an address 0.

In some embodiments, that the electronic device generates a dynamic image based on the compiled application in S402 may include the following step 1 and step 2.

Step 1: The electronic device compiles the application, to generate a first dynamic image.

For example, content stored in the first dynamic image is shown in FIG. 6A. The first dynamic image includes but is not limited to one or more of the following: an ELF header, a program header table, a code segment, a constant area segment, a data segment, an uninitialized data segment, a section header table, a string constant pool, and a symbol table.

Step 2: The electronic device determines the dynamic image based on the first dynamic image.

For example, the electronic device generates the dynamic image by performing one or more of the following operations: deleting the symbol table in the first dynamic image, adding a trampoline function pointer segment to the first dynamic image, and adding a description segment to the first dynamic image.

For example, the electronic device deletes the symbol table from the first dynamic image by using an objdump tool in a compiler.

In the first dynamic image generated by the electronic device, the code segment occupies a small part of the memory space, and the symbol table occupies a large part of the memory space. The symbol table is deleted to simplify the dynamic image, so that a size of the dynamic image can be effectively reduced, overheads of system resources can be reduced, and loading and running of diversified services can be completed by using minimum system resources.

Optionally, in addition to deleting the symbol table in the first dynamic image, the electronic device may further delete the ELF header, the program header table, the uninitialized data segment, the section header table, and/or the string constant pool during generation of the dynamic image, so that the size of the dynamic image can be further reduced.

In some embodiments, the trampoline function pointer segment may be determined by the electronic device based on the system interface trampoline function table and/or the common interface trampoline function table.

For example, the electronic device replaces at least one system interface in the system interface trampoline function table with at least one trampoline function pointer (g_callsDispatchList), and indicates a function address of the system interface by using the trampoline function pointer and a corresponding offset, and/or the electronic device replaces at least one common interface in the common interface trampoline function table with at least one trampoline function pointer, and indicates a function address of the common interface by using the trampoline function pointer and a corresponding offset.

For example, when the dynamic image includes the trampoline function pointer segment, that the electronic device determines the dynamic image based on the first dynamic image in step 2 may include: The electronic device determines the dynamic image based on the first dynamic image and the system interface trampoline function table, the electronic device determines the dynamic image based on the first dynamic image and the common interface trampoline function table, or the electronic device determines the dynamic image based on the first dynamic image, the system interface trampoline function table, and the common interface trampoline function table.

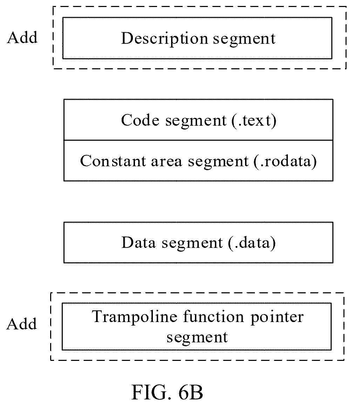

For example, the electronic device simplifies the first dynamic image (FIG. 6A is used as an example), deletes the symbol table in the first dynamic image, and adds the trampoline function pointer segment and the description segment to the first dynamic image. The obtained dynamic image is shown in FIG. 6B, and the description segment may serve as a header of the dynamic image.

FIG. 6A and FIG. 6B are merely examples. The first dynamic image and the dynamic image may include more or less content than those shown in the figure, and a location of each segment or content is not limited.

The ELF header (ELF header) indicates information such as a location and a size of the program header table and the section header table.

The program header table (Program header table) indicates information such as a size, a location, a flag, and access permission of each segment in the first dynamic image.

The constant area segment (.rodata) includes read-only data such as a string constant, a global variable const, and a constant defined by #define.

The uninitialized data segment (.bss) includes an uninitialized global variable and an uninitialized local static variable in the program. A default value of the uninitialized global variable and a default value of the uninitialized local static variable are 0.

The section header table (section header table) is used to describe a location and a size of a section, and is mainly used for linking and debugging. A section (section) is different from a segment (segment). A segment is a necessary part of program execution, and code or data in the segment is divided into different sections. The section header table is a supplement to the program header table.

The string constant pool (string table) is used to store strings to avoid repeated creation of the strings.

For specific descriptions of the ELF header, the program header table, the code segment (.text), the constant area segment, the data segment (.data), the uninitialized data segment, the section header table, the string constant pool, and the symbol table, refer to explanations and descriptions in a conventional technology.

The foregoing S401 and S402 describe a process of compiling the kernel and the application. The following describes loading of the dynamic image based on S403 to S413.

S403: The electronic device starts a dynamic loading request in a user mode.

For example, the dynamic loading request is used to request to dynamically load the dynamic image.

For example, if an application 1 running in the electronic device needs to start an application 2, the application 1 requests to dynamically load a dynamic image of the application 2.

S404: The electronic device enters a kernel mode through a system call in the user mode, to obtain the description segment.

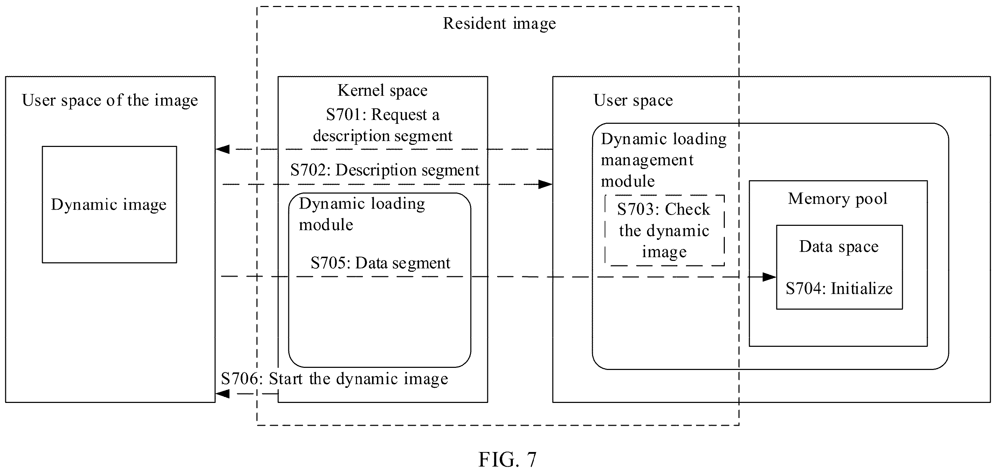

With reference to FIG. 7, a process in which the electronic device calls the system interface in the user mode to obtain the description segment may include the following S701 and S702. S701: A dynamic loading management module of the electronic device requests the description segment from the user space of the image by using a dynamic loading module. S702: The dynamic loading module of the electronic device obtains the description segment from user space of the image, and sends the description segment to the user space.

S405: The electronic device checks the dynamic image in the user mode based on the description segment.

For example, the electronic device checks the dynamic image in the user mode based on the dynamic image size, the data space size, the entry function offset, and/or the trampoline function pointer offset. For example, the electronic device checks the dynamic image based on the description segment by using a check program running in the user mode.

For example, if the dynamic image size, the data space size, the entry function offset, and/or the trampoline function pointer offset do/does not match an actual corresponding parameter of the dynamic image, the electronic device determines that the check fails; or if the dynamic image size, the data space size, the entry function offset, and/or the trampoline function pointer offset match/matches an actual corresponding parameter of the dynamic image, the electronic device determines that the check succeeds. Optionally, in a process of storing the dynamic image, the electronic device obtains the actual corresponding parameter of the dynamic image, for example, an actual address space size of the dynamic image.

For example, the electronic device checks the dynamic image based on the dynamic image size. If the electronic device determines that the dynamic image size does not match the actual address space size of the dynamic image, the check fails. If the electronic device determines that the dynamic image size matches the actual address space size of the dynamic image, the check succeeds. The electronic device checks the dynamic image based on the data space size. If the data space size is greater than the address space size of the dynamic image, the check fails. If the data space size is less than or equal to the address space size of the dynamic image, the check succeeds. The electronic device checks the dynamic image based on the entry function offset. If the entry function offset is greater than the address space size of the dynamic image, the check fails. If the entry function offset is less than or equal to the address space size of the dynamic image, the check succeeds. The electronic device checks the dynamic image based on the trampoline function pointer offset. If the trampoline function pointer offset is greater than the address space size of the dynamic image, the check fails. If the trampoline function pointer offset is less than or equal to the address space size of the dynamic image, the check succeeds.

With reference to FIG. 7, S405 may include: S703: The dynamic loading management module running in the user mode checks the dynamic image based on the description segment.

In this way, the electronic device checks the dynamic image in the user mode. If an attack specifically targeting the application exists, the user mode may be attacked, and a risk of directly attacking the kernel is significantly reduced. If the user mode is attacked, running of another application and the entire electronic device is not affected, and reliability can be improved. Therefore, upgrade or incremental deployment of a user service can be stably and reliably completed, and an authenticated service and the kernel are not affected.

S406: The electronic device allocates data space based on the data space size.

For example, the data space is used for initialization of the electronic device.

With reference to FIG. 7, the dynamic loading management module allocates the data space from a memory pool of the dynamic loading management module.

Optionally, if the electronic device successfully allocates the data space, initialization is performed (for example, S407 below is performed). If the electronic device fails to allocate the data space, a process of loading the dynamic image is exited.

S407: The electronic device initializes, in the user mode, a data segment that does not include an initial value in the application.

For example, the data segment that does not include the initial value may be a data segment other than a .data segment, for example, a .bss segment.

For example, the electronic device initializes, in the data space in the user space, the data segment that does not include the initial value.

With reference to FIG. 7, S407 may include: S704: The dynamic loading management module of the electronic device initializes, in the data space, a data segment other than the .data segment in the application.

In this way, the electronic device initializes, in the user mode, the data segment that does not include the initial value. If an attack specifically targeting the application exists, the user mode may be attacked, and a risk of directly attacking the kernel is significantly reduced. If the user mode is attacked, running of another application and the entire electronic device is not affected, and reliability can be improved. In addition, compared with an attack on the kernel, an attack on the user mode results in a smaller fault domain. After a fault occurs, only a single application is restarted, and other service functions are not affected, so that fault recovery time is short.

S408: The electronic device initializes, in the kernel mode, a data segment that includes an initial value in the application.

For example, the data segment that includes the initial value may be a .data segment.

For example, the electronic device initializes, in the data space in the user space, the data segment that includes the initial value in the application.

With reference to FIG. 7, S408 may include: S705: The dynamic loading module of the electronic device copies the data segment (.data segment) in the dynamic image to the data space.

Optionally, a sequence of initializing the data segment that does not include the initial value and initializing the data segment that includes the initial value is not limited in this application.

S409: The electronic device initializes a trampoline function pointer in the kernel mode.

For example, S409 may include: The electronic device initializes the trampoline function pointer in the dynamic image based on the trampoline function pointer offset, so that the trampoline function pointer points to the system interface trampoline function table and the common interface trampoline function table.

With reference to FIG. 7, the dynamic loading module of the electronic device initializes at least one trampoline function pointer in the kernel space.

S410: The electronic device configures an initialization process structure in the kernel mode. If the configuration succeeds, S411 below is performed. If the configuration fails, loading of the dynamic image ends.

For example, if the initialization process structure is successfully configured, the dynamic image continues to be loaded. If the initialization process structure fails to be configured, loading of the dynamic image ends.

With reference to FIG. 7, the dynamic loading module of the electronic device configures the initialization process structure in the kernel space.

S411: The electronic device initializes a running environment of the dynamic image in the kernel mode.

For example, S411 may include: The electronic device configures, in the kernel mode, a memory protection unit (memory protection unit, MPU) of the code segment and an MPU of the data segment, and performs dynamic image isolation protection.

Memory access features (such as supporting only privileged access or full access) and memory attributes (such as being cacheable, bufferable, and shareable) of different storage areas are set in the memory protection unit, to protect the code segment and the data segment, thereby improving system reliability.

With reference to FIG. 7, the dynamic loading module of the electronic device initializes the running environment of the dynamic image in the kernel space.

S412: The electronic device starts the dynamic image in the kernel mode.

For example, that the electronic device starts the dynamic image in the kernel mode in S412 may include: The electronic device starts the dynamic image in the kernel mode based on the entry function offset.

With reference to FIG. 7, S412 may include: S706: The dynamic loading module of the electronic device starts the dynamic image.

S413: The electronic device runs the dynamic image.

For example, that the electronic device runs the dynamic image in S413 may include: The electronic device accesses the kernel (the system interface) and/or the common code library (the common interface) based on the trampoline function pointer segment.

In this way, when the electronic device runs the dynamic image, the application directly jumps to a system function by using the trampoline function pointer in the trampoline function pointer segment. This can achieve effect of direct addressing, can shorten call time of the system function, and has high running efficiency and a quick response.

In this application, unless otherwise specified, for same or similar parts of embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. In the examples or optional manners described in the foregoing embodiments, any content may be freely combined, and combined content also falls within the scope of this application. The foregoing implementations of this application are not intended to limit the protection scope of this application.

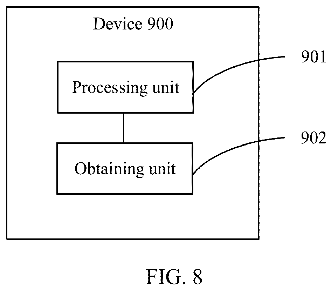

The program running method provided in embodiments of this application is described above in detail with reference to FIG. 1 to FIG. 7. The following describes in detail a device provided in embodiments of this application with reference to FIG. 8.

FIG. 8 is a diagram of a structure of a device according to an embodiment of this application. For example, the device may be an electronic device. As shown in FIG. 8, a device 900 may include a processing unit 901 and an obtaining unit 902, and may further include a transceiver unit, a display unit, and/or a communication unit (not shown in FIG. 8).

In a possible design, the device 900 is an electronic device, and the device 900 may be configured to implement functions of the electronic device in the foregoing method embodiments.

Optionally, the processing unit 901 is configured to support the electronic device in performing any processing function in FIG. 1 to FIG. 7.

Optionally, the obtaining unit 902 is configured to support the electronic device in performing any obtaining function in FIG. 1 to FIG. 7.

Optionally, the transceiver unit is configured to support the electronic device in performing any transceiver function in FIG. 1 to FIG. 7, for example, sending information to another device and/or receiving information from another device.

Optionally, the display unit is configured to support the electronic device in performing any display function and/or touch function in FIG. 1 to FIG. 7.

Optionally, the communication unit is configured to support the electronic device in performing any communication function in FIG. 1 to FIG. 7.

The transceiver unit may include a receiving unit and a sending unit, may be implemented by a transceiver or a transceiver-related circuit component, and may be a transceiver or a transceiver module. Operations and/or functions of the units in the device 900 are respectively intended to implement corresponding procedures of the method in the foregoing method embodiments. All related content of the steps in the foregoing method embodiments may be referenced to function descriptions of corresponding functional units. For brevity, details are not described herein again.

Optionally, the device 900 shown in FIG. 8 may further include a storage unit (not shown in FIG. 8), and the storage unit stores a program or instructions. When the processing unit 901, the obtaining unit 902, and the like execute the program or the instructions, the device 900 shown in FIG. 8 is enabled to perform the method in the foregoing method embodiments. The processing unit 901 and the obtaining unit 902 may be separately disposed, or may be combined into one unit. This is not limited in this application.

For technical effects of the device 900 shown in FIG. 8, refer to the technical effects of the method in the foregoing method embodiments. Details are not described herein again.

In addition to a form of the device 900, the technical solutions provided in this application may also be a functional unit or a chip in the electronic device, or an apparatus that matches the electronic device.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a readable storage medium. The readable storage medium stores a program. When the program is run on a computer or a device, the computer or the device is enabled to perform the foregoing related steps, to implement the method in the foregoing embodiments. An embodiment of this application further provides a program product. When the program product is run on a computer or a device, the computer or the device is enabled to perform the foregoing related steps, to implement the method in the foregoing embodiments.

In addition, an embodiment of this application further provides an apparatus. The apparatus may be specifically a component or a module, and the apparatus may include one or more processors and memories that are connected to each other. The memory is configured to store a program. When the program is executed by one or more processors, the apparatus is enabled to perform the method in the foregoing method embodiments.

The apparatus, the readable storage medium, the program product, or the chip provided in embodiments of this application is configured to perform the corresponding method provided above. Therefore, for beneficial effects that can be achieved, refer to the beneficial effects in the corresponding method provided above. Details are not described herein again.

The method or algorithm steps described in combination with the content disclosed in embodiments of this application may be implemented in a hardware manner, or may be implemented in a manner of executing software instructions by a processor. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or a storage medium of any other form well known in the art. For example, a storage medium is coupled to the processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

The foregoing descriptions of implementations allow a person skilled in the art to clearly understand that, for a purpose of convenient and brief description, division into the foregoing functional modules is merely used as an example for illustration. In actual application, the foregoing functions may be allocated to different functional modules for implementation based on a requirement. That is, an inner structure of an apparatus is divided into different functional modules, to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed method may be implemented in another manner. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electrical, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. The readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A program running method, comprising:
obtaining a dynamic image of an application, wherein the dynamic image comprises a trampoline function pointer segment, the trampoline function pointer segment comprises at least one trampoline function pointer, the at least one trampoline function pointer corresponds to at least one interface, and the at least one interface comprises an interface of a kernel or an interface of a common code library; and
calling the interface of the kernel or the interface of the common code library based on the trampoline function pointer segment, to run the application.

2. The method according to claim 1, wherein the trampoline function pointer segment is determined based on interface information, and the interface information indicates a mapping relationship between the at least one interface and at least one trampoline function address.

3. The method according to claim 1 or 2, wherein the obtaining a dynamic image of an application comprises:
compiling the application, to generate a first dynamic image, wherein the first dynamic image comprises a symbol table, a data segment, and a code segment; and
determining the dynamic image based on the first dynamic image, wherein the dynamic image further comprises the data segment and the code segment, and the dynamic image does not comprise the symbol table.

4. The method according to any one of claims 1 to 3, wherein the dynamic image further comprises a description segment, and the description segment comprises one or more of the following: a dynamic image size, a data space size, an entry function offset, and a trampoline function pointer offset.

5. The method according to claim 4, wherein after the obtaining a dynamic image of an application, the method further comprises:
obtaining a dynamic loading request, wherein the dynamic loading request is used to request to load the dynamic image;
entering, in a user mode, a kernel mode through a system call, to obtain the description segment in the dynamic image; and
checking the dynamic image in the user mode based on the description segment.

6. The method according to claim 4 or 5, wherein after the obtaining a dynamic image of an application, the method further comprises:
allocating, in the user mode, data space based on the data space size; and
initializing, in the data space, a data segment that does not comprise an initial value.

7. A device, comprising an obtaining unit and a processing unit, wherein
the obtaining unit is configured to obtain a dynamic image of an application, wherein the dynamic image comprises a trampoline function pointer segment, the trampoline function pointer segment comprises at least one trampoline function pointer, the at least one trampoline function pointer corresponds to at least one interface, and the at least one interface comprises an interface of a kernel or an interface of a common code library; and
the processing unit is configured to call the interface of the kernel or the interface of the common code library based on the trampoline function pointer segment, to run the application.

8. The device according to claim 7, wherein the trampoline function pointer segment is determined based on interface information, and the interface information indicates a mapping relationship between the at least one interface and at least one trampoline function address.

9. The device according to claim 7 or 8, wherein the processing unit is specifically configured to:
compile the application, to generate a first dynamic image, wherein the first dynamic image comprises a symbol table, a data segment, and a code segment; and
determine the dynamic image based on the first dynamic image, wherein the dynamic image further comprises the data segment and the code segment, and the dynamic image does not comprise the symbol table.

10. The device according to any one of claims 7 to 9, wherein the dynamic image further comprises a description segment, and the description segment comprises one or more of the following: a dynamic image size, a data space size, an entry function offset, and a trampoline function pointer offset.

11. The device according to claim 10, wherein
the obtaining unit is further configured to obtain a dynamic loading request, wherein the dynamic loading request is used to request to load the dynamic image;
the obtaining unit is further configured to enter, in a user mode, a kernel mode through a system call, to obtain the description segment in the dynamic image; and
the processing unit is further configured to check the dynamic image in the user mode based on the description segment.

12. The device according to claim 10 or 11, wherein the processing unit is further configured to:
allocate, in the user mode, data space based on the data space size; and
initialize, in the data space, a data segment that does not comprise an initial value.

13. A device, comprising a processor and a memory, wherein the memory is coupled to the processor, the memory is configured to store program code, the program code comprises instructions, and the processor reads the instructions from the memory, so that the device performs the method according to any one of claims 1 to 6.

14. A computer-readable storage medium, wherein the computer-readable storage medium comprises a computer program, and when the computer program is run on a device, the device is enabled to perform the method according to any one of claims 1 to 6.
